# EUROPEAN PATENT APPLICATION

(11) **EP 3 836 665 A1**
(43) Date of publication of application: **16.06.2021**
(21) Application number: 18929419.2
(22) Date of filing: 09.08.2018
(51) Int. Cl.: H04W 72/04, H04W 88/02

(54) **USER EQUIPMENT AND RADIO COMMUNICATION METHOD**

(71) Applicant: NTT DOCOMO, INC., Chiyoda-ku Tokyo 100-6150 (JP)
(72) Inventor: KAKISHIMA, Yuichi, Tokyo 100-6150 (JP); MATSUMURA, Yuki, Tokyo 100-6150 (JP); WANG, Xin, Beijing 100190 (CN)
(74) Representative: Hoffmann Eitle
(86) International application number: PCT/JP2018/029972
(87) International publication number: WO 2020/031342

(57) **Abstract**

A user terminal according to one aspect of the present disclosure includes a receiving section that receives an instruction to transmit a reference signal for forming spherical coverage, and a transmitting section that transmits the reference signal, forming the spherical coverage, based on the transmission instruction. According to one aspect of the present disclosure, the formation of spherical coverage can be properly controlled.

## Description

### Technical Field

The present disclosure relates to user terminals and radio communication methods in next-generation mobile communication systems.

### Background Art

Long-Term Evolution (LTE) has been specified for higher data rates, lower delay, etc. in Universal Mobile Telecommunications System (UMTS) networks (Non Patent Literature 1). Further, LTE-Advanced (LTE-A, LTE Rel. 10, 11, 12, and 13) has been specified for higher capacity and more sophistication of LTE (LTE Rel. 8 and 9).

LTE successor systems (also called, for example, Future Radio Access (FRA), the 5th generation mobile communication system (5G), 5G plus (+), New Radio (NR), New radio access (NX), Future generation radio access (FX), LTE Rel. 14, 15, or later, etc.) are being studied.

In existing LTE systems (e.g., LTE Rel. 8 to 14), a user terminal (user equipment (UE)) transmits a measurement reference signal (Sounding Reference Signal (SRS)) for uplink (UL) channel measurement.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In future radio communication systems (e.g., NR), SRSs have a wide range of uses. SRSs in NR are used not only for UL channel measurements as used in existing LTE (LTE Rel. 8 to 14), but also for downlink (DL) channel measurements, beam management, etc.

However, a network (e.g., a base station) cannot know what spatial filter has been applied to an SRS transmitted by a UE. For example, a base station cannot distinguish whether an SRS received from a UE is an SRS when the UE uses a filter configuration to transmit in local directions, or an SRS when the UE uses a filter configuration to transmit in all directions (which may be referred to as spherical coverage).

If a base station cannot determine whether or not a UE has performed SRS transmission in all directions, beam selection cannot be performed properly, which may cause a decrease in communication throughput or the like.

Therefore, it is an object of the present disclosure to provide a user terminal and a radio communication method capable of properly controlling spherical coverage formation.

### Solution to Problem

A user terminal according to one aspect of the present disclosure includes a receiving section that receives an instruction to transmit a reference signal for forming spherical coverage, and a transmitting section that transmits the reference signal, forming the spherical coverage, based on the transmission instruction.

### Advantageous Effects of Invention

According to one aspect of the present disclosure, the formation of spherical coverage can be properly controlled.

### Brief Description of Drawings

Fig. 1 is a diagram showing an example of beam forming control using an SRS.
Figs. 2A and 2B show an example of beam formation when a UE has two panels and transmits four SRS resources.
Fig. 3 is a diagram showing an example of a schematic configuration of a radio communication system according to one embodiment.
Fig. 4 is a diagram showing an example of an overall configuration of a base station according to one embodiment.
Fig. 5 is a diagram showing an example of a functional configuration of the base station according to one embodiment.
Fig. 6 is a diagram showing an example of an overall configuration of a user terminal according to one embodiment.
Fig. 7 is a diagram showing an example of a functional configuration of the user terminal according to one embodiment.
Fig. 8 is a diagram showing an example of a hardware configuration of the base station and the user terminal according to one embodiment.

### Description of Embodiments

In NR, SRSs have a wide range of uses. SRSs in NR are used not only for UL CSI measurements as used in existing LTE (LTE Rel. 8 to 14), but also for DL CSI measurements, beam management, etc.

For a UE, one or more SRS resources may be configured. The SRS resources may be identified by SRS resource indexes (SRIs).

Each SRS resource may have one or more SRS ports (may correspond to one or more SRS ports). For example, the number of ports per SRS may be one, two, or four, for example.

For a UE, one or more SRS resource sets may be configured. One SRS resource set may be associated with a predetermined number of SRS resources. The UE may use the same higher layer parameters for SRS resources included in one SRS resource set. In the present disclosure, a resource set may be replaced with a resource group, simply a group, or the like.

Information about an SRS resource set and/or SRS resources may be configured for the UE using higher layer signaling, physical layer signaling, or a combination of these. Here, the higher layer signaling may be, for example, one of Radio Resource Control (RRC) signaling, Medium Access Control (MAC) signaling, broadcast information, etc., or a combination of these.

For the MAC signaling, for example, a MAC control element (MAC CE), a MAC Protocol Data Unit (PDU), or the like may be used. The broadcast information may be, for example, a Master Information Block (MIB), a System Information Block (SIB), Remaining Minimum System Information (RMSI), other system information (OSI), or the like.

The physical layer signaling may be, for example, Downlink Control Information (DCI).

SRS configuration information (e.g., the RRC information element "SRS-Config") may include SRS resource set configuration information, SRS resource configuration information, or the like.

The SRS resource set configuration information (e.g., the RRC parameter "SRS-ResourceSet") may include information on an SRS resource set identifier (ID) (SRS-ResourceSetId), a list of SRS resource IDs (SRS-ResourceId) used in the resource set, an SRS resource type, and SRS usage.

Here, the SRS resource type may indicate one of a periodic SRS (P-SRS), a semi-persistent SRS (SP-SRS), and an aperiodic CSI (A-SRS). The UE may transmit a P-SRS and an SP-SRS periodically (or periodically after activated), and transmit an A-SRS based on an SRS request in DCI.

The SRS usage (the RRC parameter "usage" or the Layer-1 (L1) parameter "SRS-SetUse") may be, for example, beam management, codebook, non-codebook, antenna switching, or the like. An SRS used for codebook or non-codebook may be used to determine a precoder for codebook-based or non-codebook-based PUSCH transmission based on an SRI.

For an SRS used for beam management, it may be assumed that only one SRS resource per SRS resource set can be transmitted at a predetermined time instant. When different SRS resources belong to different SRS resource sets, these SRS resources may be transmitted at the same time.

The SRS resource configuration information (e.g., the RRC parameter "SRS-Resource") may include an SRS resource ID (SRS-ResourceId), the number of SRS ports, the SRS port numbers, a transmission comb, SRS resource mapping (such as a time and/or frequency resource position, a resource offset, a resource period, the number of repetitions, the number of SRS symbols, an SRS bandwidth, etc.), hopping-related information, an SRS resource type, a sequence ID, spatial relation information, etc.

The UE may transmit an SRS in as many adjacent symbols of the last six symbols in one slot as the number of SRS symbols. The number of SRS symbols may be one, two, or four, for example.

The UE may switch bandwidth parts (BWPs) to transmit an SRS or may switch antennas slot by slot. Further, the UE may apply at least one of intra-slot hopping and inter-slot hopping to SRS transmission.

As the SRS transmission comb, interleaved frequency-division multiple access (IFDMA) may be applied which uses comb 2 (in which the SRS is disposed every two resource elements (2 REs)) or comb 4 (in which the SRS is disposed every 4 REs), and a cyclic shift (CS).

The SRS spatial relation information (the RRC parameter "spatialRelationInfo") may indicate spatial relation information between a predetermined reference signal and the SRS. The predetermined reference signal may be at least one of a synchronization signal/broadcast channel (Synchronization Signal/Physical Broadcast Channel (SS/PBCH)) block, a Channel State Information Reference Signal (CSI-RS), and an SRS (e.g., another SRS). Here, an SS/PBCH block may be referred to as a synchronization signal block (SSB).

The SRS spatial relation information may include at least one of an SSB index, a CSI-RS resource ID, and an SRS resource ID, as the index of the predetermined reference signal. In the present disclosure, an SSB index and an SSB resource indicator (SSBRI) may be replaced with each other. A CSI-RS resource ID and a CSI-RS resource indicator (CRI) may be replaced with each other. An SRS resource ID and an SRI may be replaced with each other.

The SRS spatial relation information may include a serving cell index, a BWP index (BWP ID), etc. corresponding to the predetermined reference signal.

When spatial relation information about an SSB or CSI-RS and an SRS is configured on an SRS resource, the UE may transmit the SRS resource using the same spatial domain filter as a spatial domain filter for receiving the SSB or CSI-RS. That is, in this case, the UE may assume that a UE reception beam of the SSB or CSI-RS is the same as a UE transmission beam of the SRS.

When spatial relation information about an SRS (reference SRS) and an SRS (target SRS) is configured on an SRS (target SRS) resource, the UE may transmit the target SRS resource using the same spatial domain filter as a spatial domain filter for transmitting the reference SRS. That is, in this case, the UE may assume that a UE transmission beam of the reference SRS is the same as a UE transmission beam of the target SRS.

Note that a spatial domain filter for transmission of a base station, a downlink spatial domain transmission filter, and a transmission beam of the base station may be replaced with each other. A spatial domain filter for reception of the base station, an uplink spatial domain receive filter, and a reception beam of the base station may be replaced with each other.

A spatial domain filter for transmission of the UE, an uplink spatial domain transmission filter, and a transmission beam of the UE may be replaced with each other. A spatial domain filter for reception of the UE, a downlink spatial domain receive filter, and a reception beam of the UE may be replaced with each other.

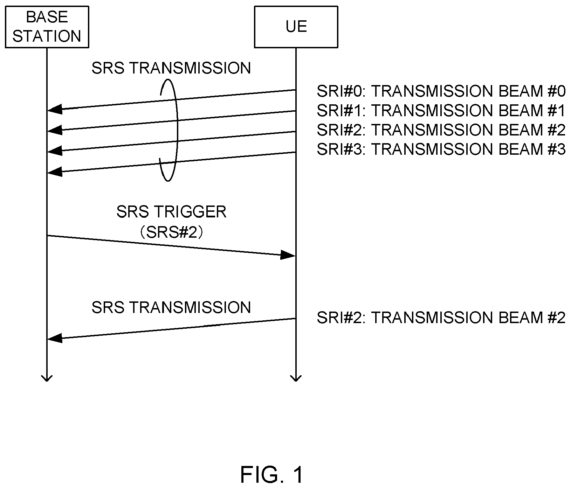

Fig. 1 is a diagram showing an example of beam forming control using an SRS. In this example, the UE is first instructed to transmit SRIs #0 to #3. The UE performs SRS transmission using transmission beams #0 to #3 for SRIs #0 to #3, respectively.

The base station may know in advance what beams transmission beams #0 to #3 are. The base station may measure uplink channels (or UL CSI) based on transmission beams #0 to #3.

For example, the base station may determine that the measurement result of transmission beam #2 (SRI #2) is the best, and then instruct the UE to transmit a beam using SRI #2. The UE may transmit an SRS using transmission beam #2 corresponding to SRI #2 based on the instruction. The base station can understand what beam the UE uses with which resource (SRI).

Note that the control in Fig. 1 may be performed regardless of whether or not the UE has beam correspondence.

On the other hand, if the UE has beam correspondence, beam forming control different from that in Fig. 1 may be applied. For example, the UE may first perform measurements on multiple DL RSs (DL RSs #0 to #3) (e.g. CSI-RSs) using multiple reception beams (e.g., reception beams #0 to #3), and then, based on an SRS trigger based on DL RS #2, perform SRS transmission using reception beam #2 as a transmission beam.

If the UE has correspondence, the following (1) and/or (2) may be assumed to be satisfied: (1) the UE can determine a transmission beam of the UE for uplink transmission, based on downlink measurements by the UE using one or more of reception beams of the UE, and/or (2) the UE can determine a reception beam of the UE for downlink reception, based on an instruction from the base station based on uplink measurements by the base station using one or more transmission beams of the UE.

If the base station has correspondence, the following (3) and/or (4) may be assumed to be satisfied: (3) the base station can determine a reception beam of the base station for uplink reception, based on downlink measurements by the UE using one or more of transmission beams of the base station, and/or (4) the base station can determine a transmission beam of the base station for downlink transmission, based on uplink measurements by the base station using one or more reception beams of the base station.

That is, the UE or the base station having beam correspondence may assume that transmission and reception beams match (or almost match). Beam correspondence may be referred to as beam reciprocity, beam calibration, simply correspondence, or the like.

A beam instruction for a PUCCH may be configured by higher layer signaling (PUCCH-Spatial-relation-info of RRC). For example, if the PUCCH-Spatial-relation-info includes one SpatialRelationInfo parameter, the UE may apply the configured parameter to the PUCCH. If the PUCCH-Spatial-relation-info includes more than one SpatialRelationInfo parameter, a parameter applied to the PUCCH may be determined based on a MAC CE.

A beam instruction for a PUSCH may be determined based on an SRS resource indicator (SRI) field included in DCI.

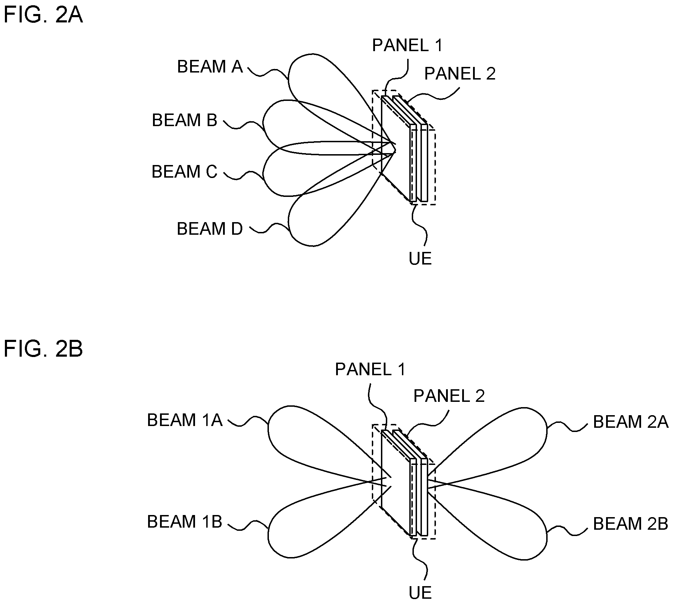

An example of beams applied to an SRS will be described with reference to Figs. 2A and 2B. Figs. 2A and 2B show an example of beam formation when the UE has two panels and transmits four SRS resources. In this example, the two panels (panels 1 and 2) are placed in parallel.

Fig. 2A shows an example of transmitting SRS resources in local directions. In Fig. 2A, the UE transmits the four SRS resources using beams A to D, respectively. The beams A to D have slightly different directions.

Fig. 2B shows an example of transmitting SRS resources in all directions (spherically). In Fig. 2B, the UE transmits two SRS resources in front directions of one panel (panel 1) using beams 1A and 1B, respectively, and transmits two SRS resources in front directions of the other panel (panel 2) using beams 2A and 2B, respectively. The beams 1A and 1B (or 2A and 2B) have largely different directions.

A network (e.g., a base station) cannot know what spatial filter has been applied to the SRS transmitted by the UE. For example, the base station cannot distinguish whether an SRS received from the UE is an SRS when the UE uses a filter configuration to transmit an SRS in local directions as in Fig. 2A, or an SRS when the UE uses a filter configuration to transmit an SRS in all directions as in Fig. 2B.

If a base station cannot determine whether or not a UE has performed SRS transmission in all directions, beam selection cannot be performed properly, which may cause a decrease in communication throughput or the like.

Therefore, the present inventors have conceived a method in which a network controls UE beam transmission covering all directions. One aspect of the present disclosure allows proper SRS beam control by a network, and allows control in which a base station recognizes beam sweeping in all directions by a UE.

Hereinafter, embodiments according to the present disclosure will be described in detail with reference to the drawings. Radio communication methods according to the respective embodiments may be applied singly or in combination.

Note that the transmission range of a signal/channel (or a beam) covering all directions or transmission covering all directions may be referred to as spherical coverage (or spherical coverage transmission). Spherical coverage may relate to a UE's minimum transmission and reception range. Spherical coverage may be defined according to examples of specific definitions described below.

The following describes SRS spherical coverage. However, an SRS in the present disclosure may be replaced with another uplink or downlink channel and/or signal (e.g., a DMRS).

### (Radio communication method)

In one embodiment, a UE may report information about the number of beams for spherical coverage to a base station. The UE may transmit the information as UE capability information. In the present disclosure, the number of beams, the number of resources, the number of types, etc. may be able to be replaced with each other.

The information may indicate the number of beams or the number of resources required for the UE to achieve spherical coverage. The number of beams may be referred to as the number of spherical cover beams, the number of cover beams, or the like. The number of resources may be referred to as the number of spherical cover resources, the number of cover resources, or the like.

The number of cover beams (resources) may be the minimum required number of beams for the UE to form or support spherical coverage, or may be determined (or defined) based on the minimum required number of beams.

At least one of the following may be assumed to be the number of cover resources:
- the maximum number of SRS resources per BWP;
- the maximum number of SRS resources per BWP and per slot; and
- the maximum number of SRS resources transmitted simultaneously per component carrier (CC) in one symbol for a non-codebook-based PUSCH.

The SRS resources referred to here may represent at least A-SRS resources, P-SRS resources, or SP-SRS resources. The maximum number of at least one of these SRS resources may be a value transmitted by the UE as the UE capability information, or may mean the maximum number of SRS resources that can be configured for the UE. Further, the maximum value of at least one of these SRS resources may be a value determined by the base station based on the UE capability information received from the UE.

For example, the number of cover resources may be assumed to be equal to at least one of the following:
- the maximum number of A-SRS resources per BWP (the RRC parameter "maxNumberAperiodicSRS-PerBWP");
- the maximum number of P-SRS resources per BWP (the RRC parameter "maxNumberPeriodicSRS-PerBWP");
- the maximum number of SP-SRS resources per BWP (the RRC parameter "maxNumberSemiPersitentSRS-PerBWP");
- the maximum number of A-SRS resources per BWP and per slot (the RRC parameter "maxNumberAperiodicSRS-PerBWP-PerSlot");
- the maximum number of P-SRS resources per BWP and per slot (the RRC parameter "maxNumberPeriodicSRS-PerBWP-PerSlot"); and
- the maximum number of SP-SRS resources per BWP and per slot (the RRC parameter "maxNumberSP-SRS-PerBWP-PerSlot").

If at least one of the maximum numbers of the SRS resources listed above by a UE and the number of SRS resources configured for the UE by the base station are equal or different within a certain range, it may be assumed that the UE will form spherical coverage on SRS transmission.

For example, if the above-mentioned UE capability information that the maximum number of SRS resources is four is transmitted to the base station, and the base station configures four SRS resources for the UE, the base station and the UE may assume that the UE will form spherical coverage on SRS transmission.

The UE may transmit, to the base station, information indicating that at least one of the maximum numbers of the SRS resources listed above is the number of cover resources (may be considered as the number of cover resources). The base station may assume that the number of cover resources of the UE that has transmitted the information is equal to the maximum number of SRS resources.

The UE may transmit, to the base station, information about the indexes of SRS resources used to form spherical coverage. The information about the indexes may be at least SRIs, beam indexes, or the like.

For example, the UE may notify the base station that the indexes of SRS resources used to form spherical coverage are SRIs #1, #3, #5, and #7. In this case, the base station may assume that spherical coverage can be formed if the UE transmits an SRS using SRIs #1, #3, #5, and #7.

The UE does not have to be required to transmit an SRS using SRS resources exceeding the number of cover resources. For example, the UE may assume that the number of SRS resources in a configured SRS resource set does not exceed the number of cover resources.

The UE may assume that the number of SRS resources activated (or triggered or configured) at the same time does not exceed the number of cover resources. The UE may assume that the number of SRS resources in an SRS resource set activated (or triggered or configured) at the same time does not exceed the number of cover resources. When performing spherical coverage transmission, the UE may assume that SRS resources exceeding the number of cover resources are not transmitted at the same time, or may assume that SRS resources equal to the number of cover resources are transmitted at the same time.

When instructed (or triggered) to transmit an SRS using SRS resources exceeding the number of cover resources, the UE may ignore the instruction (or trigger). When instructed (or triggered) to transmit an SRS using SRS resources exceeding the number of cover resources in an SRS resource set, the UE may ignore the instruction (or trigger). In this case, the UE does not have to perform (or may skip or drop) the instructed transmission of all SRS resources. Alternatively, the UE may perform transmission of up to as many SRS resources as the number of cover resources without performing the instructed transmission of some SRS resources.

For example, the UE that has been instructed to transmit six SRS resources when the number of cover resources is four may perform control to transmit specific four of the six resources and not to transmit the remaining two. In this case, the UE may select SRS resources to be transmitted, for example, in ascending order of SRIs.

When instructed (or triggered) to transmit an SRS using SRS resources exceeding the number of cover resources, the UE may perform transmission using SRS resources that form spherical coverage. When instructed (or triggered) to transmit an SRS using SRS resources exceeding the number of cover resources in an SRS resource set, the UE may perform transmission using SRS resources that form spherical coverage.

The UE may be instructed (or triggered) to transmit SRS resources (or a resource set) that form spherical coverage. An instruction to transmit SRS resources that form spherical coverage may be reported to the UE using higher layer signaling (e.g., RRC signaling or MAC signaling (such as a MAC CE)), physical layer signaling (e.g., DCI), or a combination of these.

Configuration information on an SRS resource set may include information indicating that this resource set corresponds to spherical coverage. For example, when SRS usage included in SRS resource set configuration information corresponds to "spherical coverage" or "spherical beam", SRS resources corresponding to the SRS resource set may be assumed to be used to form spherical coverage.

The UE instructed to transmit SRS resources or an SRS resource set corresponding to spherical coverage may perform SRS transmission to form spherical coverage using the resources or resource set.

If DCI (such as a UL grant or DCI format 0_0 or 0_1) includes a field that instructs transmission of SRS resources corresponding to spherical coverage, the UE may perform transmission using SRS resources that form spherical coverage.

### <Achieving spherical coverage>

Spherical coverage may be defined based on the cumulative probability (e.g., the cumulative distribution function (CDF)) of the value of equivalent isotopically radiated power (EIRP) or effective isotropic sensitivity (EIS) obtained when beams are steered to the entire sphere centered on the UE.

As a requirement for spherical coverage, for example, the minimum EIRP/EIS at the 50% percentile (median value) of a radiated power distribution (CDF) measured over the full sphere around the UE may be defined.

Spherical coverage may be defined based on, for example, a variance from the mean or median value of the EIRP/EIS value. Alternatively, spherical coverage may be defined based on a difference between the lower limit of the EIRP/EIS value (e.g., the 5% value of the CDF) and the mean or median value.

Transmission forming spherical coverage may be replaced with at least one of transmission using a specific number of SRS resources (e.g., the maximum number of SRS resources reported or configured), transmission using a specific number of beams, transmission using beams of a specific beam width, transmission satisfying specific EIRP or EIS, etc. A value related to "specific..." here may be configured for the UE using higher layer signaling or the like, or may be determined by specifications.

The transmission of SRS resources forming spherical coverage may be performed, for example, by transmitting all the SRS resources at the same time (in an overlapping manner), or by transmitting these SRS resources sequentially during a predetermined period (by beam sweeping). The predetermined period to form spherical coverage may be represented, for example, in one or more time units (symbols, slots, or the like). Information on the predetermined period may be configured for the UE by, for example, higher layer signaling.

Spherical coverage may be achieved using one or more SRS resources in one SRS resource set, or may be achieved using multiple SRS resource sets. For example, SRS resources of the beams 1A, 1B, 2A, and 2B for achieving spherical coverage in Fig. 2B described above may be included in the same SRS resource set. Alternatively, when achieving spherical coverage in Fig. 2B, the UE may use both a first SRS resource set including SRS resources of the beams 1A and 1B and a second SRS resource set including SRS resources of the beams 2A and 2B.

The UE may transmit information about an SRS resource set required to form spherical coverage to the base station. For example, the information may be information about the number of SRS resource sets or the index of an SRS resource set.

The UE may transmit information about the index of an SRS resource set used to form spherical coverage to the base station. The information about the index may be, for example, at least one of an SRS resource set ID, an SSBRI, a CRI, etc.

The base station may control (e.g., trigger) SRS transmission in units of SRS resource sets. For example, the base station may transmit, to the UE, higher layer signaling or physical layer signaling to trigger transmission of an SRS resource set that forms spherical coverage.

According to the embodiments described above, the UE can properly form spherical coverage.

### <Others>

Each embodiment of the present disclosure may be applied regardless of uplinks and downlinks. For example, an uplink signal/channel and a downlink signal/channel may be replaced with each other. In that case, transmission and reception may be replaced with each other. Further, uplink feedback information (e.g., Uplink Control Information (UCI)) and downlink control signaling (e.g., DCI) may be replaced with each other.

SRSs in the present disclosure may be used for beam management, beam failure recovery, uplink propagation path estimation (UL CSI acquisition), downlink propagation path estimation (DL CSI acquisition), other beam control, link control, etc.

### (Radio communication system)

A configuration of a radio communication system according to one embodiment of the present disclosure will be described below. In this radio communication system, communication is performed using one or a combination of the radio communication methods according to the above embodiments of the present disclosure.

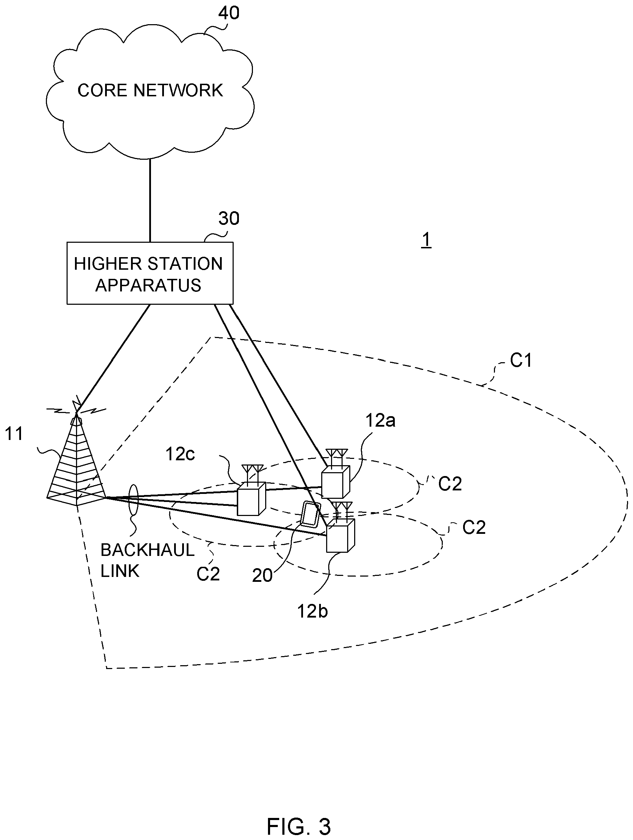

Fig. 3 is a diagram showing an example of a schematic configuration of a radio communication system according to one embodiment. A radio communication system 1 can apply at least one of carrier aggregation (CA) and dual connectivity (DC) in which multiple fundamental frequency blocks (component carriers) with a system bandwidth (e.g., 20 MHz) as one unit are aggregated.

Note that the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA), New-Radio Access Technology (RAT), or the like, or may be referred to as a system implementing these.

The radio communication system 1 may support dual connectivity between multiple Radio Access Technologies (RATs) (Multi-RAT Dual Connectivity (MR-DC)). MR-DC may include dual connectivity between LTE and NR (E-UTRA-NR Dual Connectivity (EN-DC)) in which an LTE (E-UTRA) base station (eNB) is a master node (MN) and an NR base station (gNB) is a secondary node (SN), dual connectivity between NR and LTE (NR-E-UTRA Dual Connectivity (NE-DC)) in which an NR base station (gNB) is an MN, and an LTE (E-UTRA) base station (eNB) is an SN, etc.

The radio communication system 1 includes a base station 11 that forms a macro cell C1 of a relatively wide coverage, and base stations 12 (12a to 12c) that are placed within the macro cell C1 and form small cells C2 narrower than the macro cell C1. A user terminal 20 is placed in the macro cell C1 and in each small cell C2. The arrangement, numbers, etc. of the cells and the user terminal 20 are not limited to the aspect shown in the figure.

The user terminal 20 can connect to both the base station 11 and each base station 12. The user terminal 20 is expected to use the macro cell C1 and the small cells C2 at the same time using CA or DC. Furthermore, the user terminal 20 may apply CA or DC using multiple cells (CCs).

Between the user terminal 20 and the base station 11, communication can be performed using a carrier of a relatively low frequency band (e.g., 2 GHz) and a narrow bandwidth (also referred to as an existing carrier, a legacy carrier, or the like). On the other hand, between the user terminal 20 and the base stations 12, a carrier of a relatively high frequency band (such as 3.5 GHz or 5 GHz) and a wide bandwidth may be used, or the same carrier as that used with the base station 11 may be used. Note that the configurations of frequency bands used by the base stations are not limited to these.

Further, the user terminal 20 can perform communication in each cell using at least one of time division duplex (TDD) and frequency division duplex (FDD). In each cell (carrier), a single numerology may be applied, or multiple different numerologies may be applied.

A numerology may be a communication parameter applied to at least one of transmission and reception of a certain signal or channel, and may indicate, for example, at least one of a subcarrier spacing, a bandwidth, a symbol length, a cyclic prefix length, a subframe length, a TTI length, the number of symbols per TTI, a radio frame configuration, specific filtering processing performed by a transceiver in the frequency domain, specific windowing processing performed by a transceiver in the time domain, etc.

For example, a physical channel that is different in at least one of the subcarrier spacing of OFDM symbols constituting it and the number of OFDM symbols may be said to have a different numerology.

The base station 11 and each base station 12 (or two base stations 12) may be connected by wire (e.g., optical fiber in compliance with the Common Public Radio Interface (CPRI), the X2 interface, or the like), or by radio.

The base station 11 and the base stations 12 are each connected to higher station apparatus 30, and are connected to a core network 40 via the higher station apparatus 30. The higher station apparatus 30 includes, for example, an access gateway device, a radio network controller (RNC), a mobility management entity (MME), etc., but is not limited to these. Each base station 12 may be connected to the higher station apparatus 30 via the base station 11.

The base station 11 is a base station having a relatively wide coverage, and may be referred to as a macro base station, an aggregate node, an eNB (eNodeB), a transmission/reception point, or the like. The base stations 12 are base stations having local coverages, and may be referred to as small base stations, micro base stations, pico base stations, femto base stations, Home eNodeBs (HeNBs), Remote Radio Heads (RRHs), transmission/reception points, or the like. Hereinafter, the base stations 11 and 12, when not distinguished, will be collectively referred to as base stations 10.

The user terminals 20 are terminals that support various communication schemes such as LTE, LTE-A, and 5G, and may include fixed communication terminals (fixed stations) as well as mobile communication terminals (mobile stations).

In the radio communication system 1, as radio access schemes, orthogonal frequency-division multiple access (OFDMA) is applied to downlinks, and at least one of single-carrier frequency-division multiple access (SC-FDMA) and OFDMA is applied to uplinks.

OFDMA is a multi-carrier transmission scheme in which a frequency band is divided into a plurality of narrow frequency bands (subcarriers), and data is mapped to the subcarriers to perform communication. SC-FDMA is a single-carrier transmission scheme in which a system bandwidth is divided into bands formed by one or consecutive resource blocks per terminal, and different terminals use different bands to reduce interference between the terminals. Uplink and downlink radio access schemes are not limited to the combination of these, and other radio access schemes may be used.

The radio communication system 1 uses, as downlink channels, a downlink shared channel (Physical Downlink Shared Channel (PDSCH)) shared by the user terminals 20, a broadcast channel (Physical Broadcast Channel (PBCH)), downlink control channels, etc. User data, higher layer control information, System Information Blocks (SIBs), etc. are transmitted by a PDSCH. Master Information Blocks (MIBs) are transmitted by a PBCH.

The downlink control channels include a Physical Downlink Control Channel (PDCCH), an Enhanced Physical Downlink Control Channel (EPDCCH), a Physical Control Format Indicator Channel (PCFICH), a Physical Hybrid-ARQ Indicator Channel (PHICH), etc. Downlink Control Information (DCI) including scheduling information of at least one of a PDSCH and a PUSCH, etc. are transmitted by a PDCCH.

DCI to schedule DL data reception may be referred to as a DL assignment, and DCI to schedule UL data transmission may be referred to as a UL grant.

The number of OFDM symbols used for a PDCCH may be transmitted by a PCFICH. Hybrid Automatic Repeat reQuest (HARQ) delivery acknowledgement information (also referred to as, for example, retransmission control information, HARQ-ACK, ACK/NACK, or the like) to a PUSCH may be transmitted by a PHICH. An EPDCCH is frequency-division-multiplexed with a PDSCH (downlink shared data channel) and used to communicate DCI etc., like a PDCCH.

The radio communication system 1 uses, as uplink channels, an uplink shared channel (Physical Uplink Shared Channel (PUSCH)) shared by user terminals 20, an uplink control channel (Physical Uplink Control Channel (PUCCH)), a random access channel (Physical Random Access Channel (PRACH)), etc. User data, higher layer control information, etc. are transmitted by a PUSCH. Downlink radio quality information (Channel Quality Indicator (CQI)), delivery acknowledgment information, a scheduling request (SR), etc. are transmitted by a PUCCH. A random access preamble for establishing connection with a cell is transmitted by a PRACH.

In the radio communication system 1, as downlink reference signals, a Cell-specific Reference Signal (CRS), a Channel State Information-Reference Signal (CSI-RS), a DeModulation Reference Signal (DMRS), a Positioning Reference Signal (PRS), etc. are transmitted. In the radio communication system 1, as uplink reference signals, a measurement reference signal (Sounding Reference Signal (SRS)), a demodulation reference signal (DMRS), etc. are transmitted. A DMRS may be referred to as a UE-specific Reference Signal. Reference signals transmitted are not limited to these.

### (Base station)

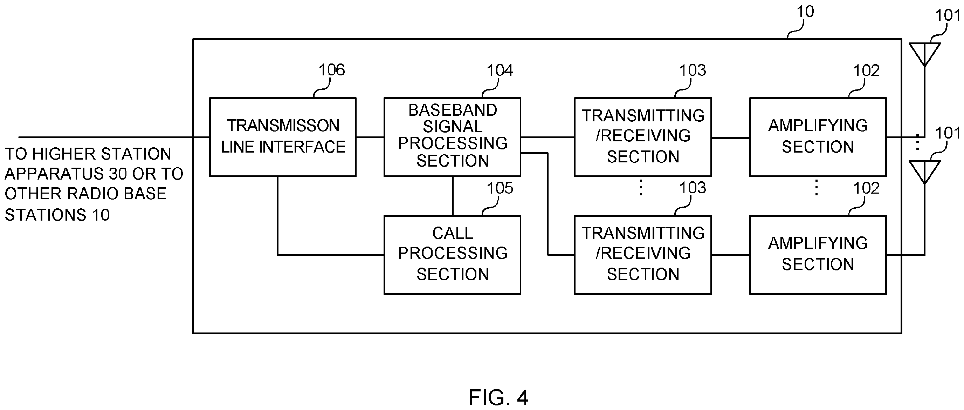

Fig. 4 is a diagram showing an example of an overall configuration of a base station according to one embodiment. The base station 10 includes a plurality of transmitting and receiving antennas 101, amplification sections 102, transmitting/receiving sections 103, a baseband signal processing section 104, a call processing section 105, and a transmission line interface 106. The numbers of the transmitting and receiving antennas 101, the amplification sections 102, and the transmitting/receiving sections 103 may each be at least one.

User data to be transmitted from the base station 10 to the user terminal 20 by the downlink is input from the higher station apparatus 30 through the transmission line interface 106 to the baseband signal processing section 104.

In the baseband signal processing section 104, the user data is subjected to transmission processing such as Packet Data Convergence Protocol (PDCP) layer processing, division and coupling of the user data, Radio Link Control (RLC) layer transmission processing such as RLC retransmission control, Medium Access Control (MAC) retransmission control (e.g., HARQ transmission processing), scheduling, transmission format selection, channel coding, inverse fast Fourier transform (IFFT) processing, and precoding processing, and is transferred to the transmitting/receiving sections 103. A downlink control signal is also subjected to transmission processing such as channel coding and an inverse fast Fourier transform, and is transferred to the transmitting/receiving sections 103.

The transmitting/receiving sections 103 convert baseband signals that are precoded on an antenna-by-antenna basis and output from the baseband signal processing section 104 into a radio frequency band for transmission. The radio frequency signals frequency-converted in the transmitting/receiving sections 103 are amplified by the amplification sections 102 and transmitted from the transmitting and receiving antennas 101. Each transmitting/receiving section 103 can be constituted by a transmitter/receiver, a transmitting/receiving circuit, or a transmitting/receiving device that is explained based on common understanding in the technical field of the present disclosure. Note that each transmitting/receiving section 103 may be formed as a one-piece transmitting/receiving section, or may be comprised of a transmitting section and a receiving section.

On the other hand, for uplink signals, radio frequency signals received by the transmitting and receiving antennas 101 are amplified by the amplification sections 102. The transmitting/receiving sections 103 receive the uplink signals amplified by the amplification sections 102. The transmitting/receiving sections 103 frequency-convert the received signals into baseband signals, and output them to the baseband signal processing section 104.

In the baseband signal processing section 104, user data included in the input uplink signals is subjected to fast Fourier transform (FFT) processing, inverse discrete Fourier transform (IDFT) processing, error correction decoding, MAC retransmission control reception processing, and RLC layer and PDCP layer reception processing, and is transferred to the higher station apparatus 30 via the transmission line interface 106. The call processing section 105 performs communication channel call processing (such as configuration and release), state management of the base station 10, radio resource management, etc.

The transmission line interface 106 transmits and receives signals to and from the higher station apparatus 30 via a predetermined interface. The transmission line interface 106 may transmit and receive signals (backhaul signaling) with another base station 10 via an inter-base station interface (for example, optical fiber in compliance with the Common Public Radio Interface (CPRI) or the X2 interface).

Each transmitting/receiving section 103 may further include an analog beam forming section that performs analog beam forming. The analog beam forming section can be constituted by an analog beam forming circuit (e.g., a phase shifter or a phase shift circuit) or an analog beam forming device (e.g., a phase shifter) that is explained based on common understanding in the technical field of the present disclosure. The transmitting and receiving antennas 101 can be constituted by an array antenna, for example. The transmitting/receiving sections 103 may be configured to be able to apply single beam forming (BF), multi-BF, etc.

The transmitting/receiving sections 103 may transmit signals using a transmission beam, and may receive signals using a reception beam. The transmitting/receiving sections 103 may transmit and/or receive signals using a predetermined beam determined by a control section 301.

The transmitting/receiving sections 103 may receive from the user terminal 20 and/or transmit to the user terminal 20 various types of information described in the above-described embodiments.

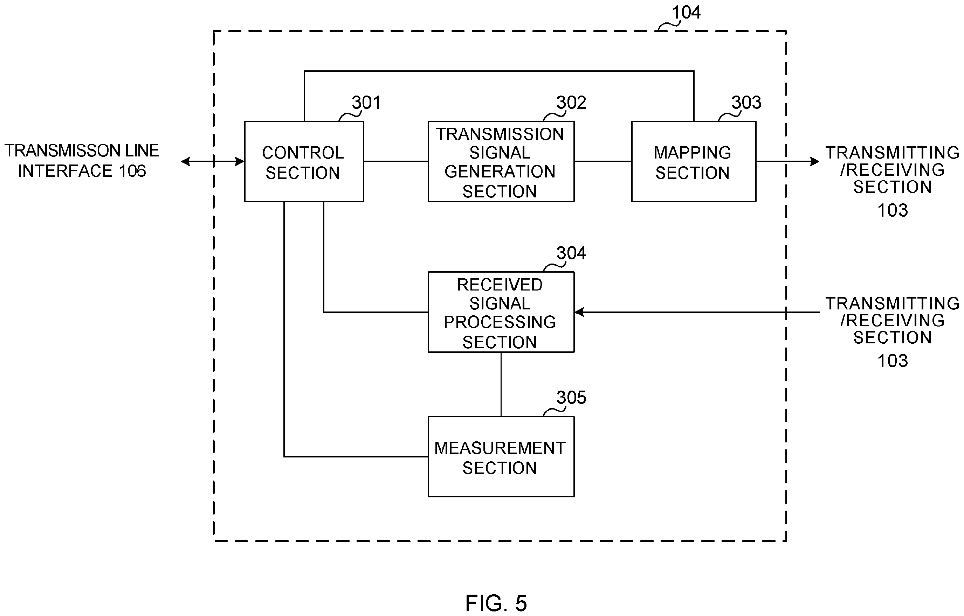

Fig. 5 is a diagram showing an example of a functional configuration of the base station according to one embodiment. In this example, functional blocks of characteristic parts in the present embodiment are mainly shown. It may be assumed that the base station 10 also includes other functional blocks necessary for radio communication.

The baseband signal processing section 104 includes at least the control section (scheduler) 301, a transmission signal generation section 302, a mapping section 303, a reception signal processing section 304, and a measurement section 305. Note that these components only need to be included in the base station 10, and part or all of the components may not be included in the baseband signal processing section 104.

The control section (scheduler) 301 controls the entirety of the base station 10. The control section 301 can be constituted by a controller, a control circuit, or a control device that is explained based on common understanding in the technical field of the present disclosure.

For example, the control section 301 controls the generation of signals in the transmission signal generation section 302, the allocation of signals in the mapping section 303, etc. Further, the control section 301 controls signal reception processing in the reception signal processing section 304, signal measurements in the measurement section 305, etc.

The control section 301 controls scheduling (e.g., resource allocation) of system information, downlink data signals (e.g., signals transmitted on a PDSCH), and downlink control signals (e.g., signals transmitted on a PDCCH and/or an EPDCCH, such as delivery acknowledgement information). Furthermore, the control section 301 controls generation of downlink control signals, downlink data signals, etc., based on the results of determining whether or not retransmission control on uplink data signals is necessary, etc.

The control section 301 controls scheduling of synchronization signals (e.g., PSS/SSS), downlink reference signals (e.g., CRS, CSI-RS, and DMRS), etc.

The control section 301 may perform control to form transmission beams and/or reception beams, using digital BF (e.g., precoding) by the baseband signal processing section 104 and/or analog BF (e.g., phase rotation) by the transmitting/receiving sections 103.

The transmission signal generation section 302 generates downlink signals (a downlink control signal, a downlink data signal, a downlink reference signal, etc.) based on instructions from the control section 301, and outputs them to the mapping section 303. The transmission signal generation section 302 can be constituted by a signal generator, a signal generation circuit, or a signal generation device that is explained based on common understanding in the technical field of the present disclosure.

For example, the transmission signal generation section 302 generates a DL assignment to report downlink data allocation information, and/or a UL grant to report uplink data allocation information, based on an instruction from the control section 301. The DL assignment and the UL grant are both DCI, and follow the DCI format. A downlink data signal is subjected to coding processing, modulation processing, etc., according to a coding rate, a modulation scheme, etc. determined based on Channel State Information (CSI) from each user terminal 20.

The mapping section 303 maps a downlink signal generated in the transmission signal generation section 302 to predetermined radio resources based on an instruction from the control section 301, and outputs it to the transmitting/receiving sections 103. The mapping section 303 can be constituted by a mapper, a mapping circuit, or a mapping device that is explained based on common understanding in the technical field of the present disclosure.

The reception signal processing section 304 performs reception processing (such as demapping, demodulation, and decoding) on received signals input from the transmitting/receiving sections 103. Here, the received signals are, for example, uplink signals transmitted from the user terminal 20 (such as an uplink control signal, an uplink data signal, and an uplink reference signal). The reception signal processing section 304 can be constituted by a signal processor, a signal processing circuit, or a signal processing device that is explained based on common understanding in the technical field of the present disclosure.

The reception signal processing section 304 outputs information decoded by the reception processing to the control section 301. For example, when a PUCCH including a HARQ-ACK is received, the HARQ-ACK is output to the control section 301. Further, the reception signal processing section 304 outputs received signals and/or signals that have been subjected to the reception processing to the measurement section 305.

The measurement section 305 performs measurements on the received signals. The measurement section 305 can be constituted by a measuring instrument, a measuring circuit, or a measuring device that is explained based on common understanding in the technical field of the present disclosure.

For example, the measurement section 305 may perform a Radio Resource Management (RRM) measurement, a Channel State Information (CSI) measurement, etc., based on received signals. The measurement section 305 may measure received power (e.g., Reference Signal Received Power (RSRP)), received quality (e.g., Reference Signal Received Quality (RSRQ)), signal-to-interference-plus-noise ratio (SINR), signal-to-noise ratio (SNR), signal strength (e.g., Received Signal Strength Indicator (RSSI)), propagation path information (e.g., CSI), etc. The measurement results may be output to the control section 301.

The transmitting/receiving sections 103 may transmit an instruction to transmit a reference signal for forming spherical coverage to the user terminal 20. The reference signal may be an SRS, or may be replaced with another reference signal, a desired signal or channel, or a combination of these.

The transmitting/receiving sections 103 may receive the reference signal forming the spherical coverage which is transmitted based on the transmission instruction.

### (User terminal)

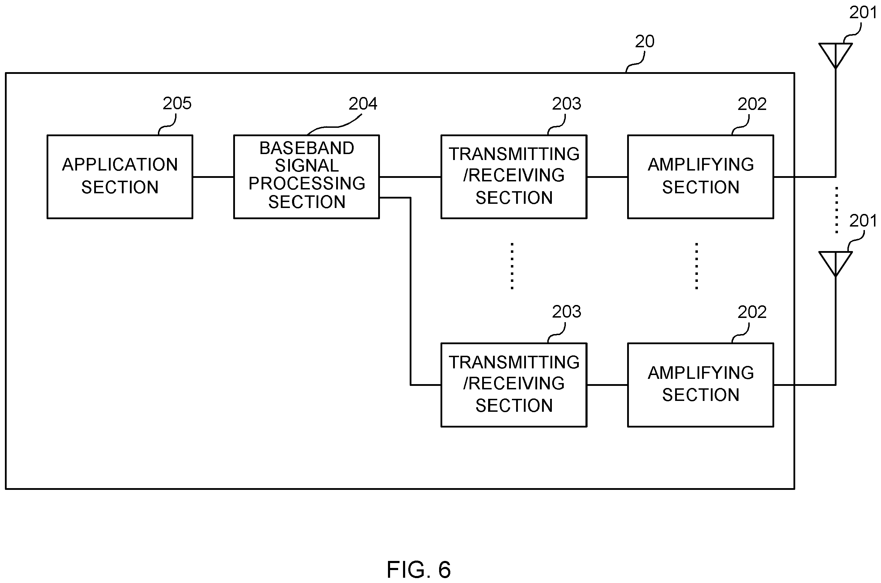

Fig. 6 is a diagram showing an example of an overall configuration of a user terminal according to one embodiment. The user terminal 20 includes a plurality of transmitting and receiving antennas 201, amplification sections 202, transmitting/receiving sections 203, a baseband signal processing section 204, and an application section 205. The numbers of the transmitting and receiving antennas 201, the amplification sections 202, and the transmitting/receiving sections 203 may each be at least one.

Radio frequency signals received by the transmitting and receiving antennas 201 are amplified by the amplification sections 202. The transmitting/receiving sections 203 receive downlink signals amplified by the amplification sections 202. The transmitting/receiving sections 203 frequency-convert the received signals into baseband signals, and output them to the baseband signal processing section 204. Each transmitting/receiving section 203 can be constituted by a transmitter/receiver, a transmitting/receiving circuit, or a transmitting/receiving device that is explained based on common understanding in the technical field of the present disclosure. Each transmitting/receiving section 203 may be formed as a one-piece transmitting/receiving section, or may be comprised of a transmitting section and a receiving section.

The baseband signal processing section 204 performs, on the input baseband signals, FFT processing, error correction decoding, retransmission control reception processing, etc. Downlink user data is transferred to the application section 205. The application section 205 performs processing related to a higher layer above the physical layer and the MAC layer, etc. Of downlink data, broadcast information may also be transferred to the application section 205.

On the other hand, uplink user data is input from the application section 205 to the baseband signal processing section 204. The baseband signal processing section 204 performs retransmission control transmission processing (e.g., HARQ transmission processing), channel coding, precoding, discrete Fourier transform (DFT) processing, IFFT processing, etc. for transfer to the transmitting/receiving sections 203.

The transmitting/receiving sections 203 convert baseband signals output from the baseband signal processing section 204 into a radio frequency band for transmission. The radio frequency signals frequency-converted by the transmitting/receiving sections 203 are amplified by the amplification sections 202 and transmitted from the transmitting and receiving antennas 201.

Each transmitting/receiving section 203 may further include an analog beam forming section that performs analog beam forming. The analog beam forming section can be constituted by an analog beam forming circuit (e.g., a phase shifter or a phase shift circuit) or an analog beam forming device (e.g., a phase shifter) that is explained based on common understanding in the technical field of the present disclosure. The transmitting and receiving antennas 201 can be constituted by an array antenna, for example. The transmitting/receiving sections 203 may be configured to be able to apply single BF, multi-BF, etc.

The transmitting/receiving sections 203 may transmit signals using a transmission beam, and may receive signals using a reception beam. The transmitting/receiving sections 203 may transmit and/or receive signals using a predetermined beam determined by the control section 401.

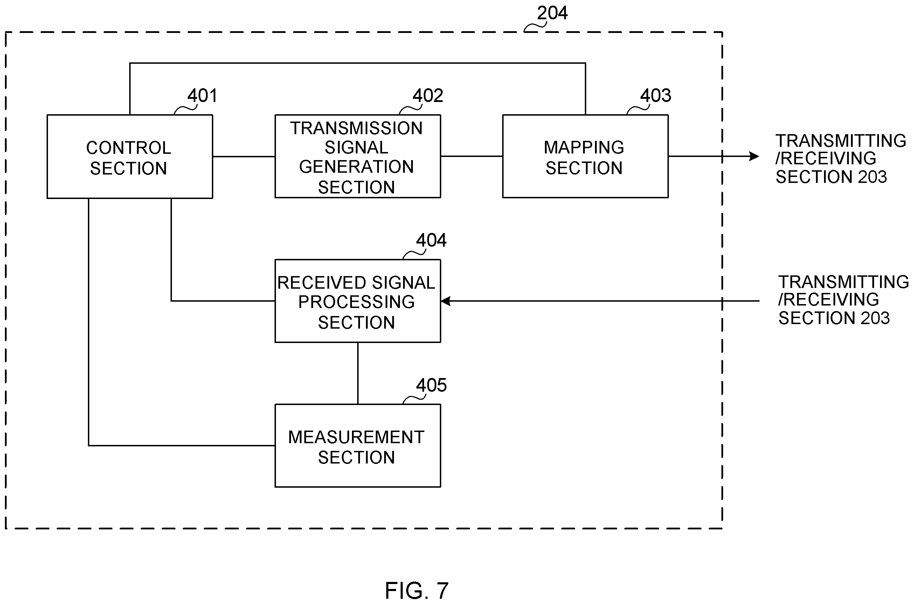

Fig. 7 is a diagram showing an example of a functional configuration of the user terminal according to one embodiment. In this example, the functional blocks of characteristic parts in the present embodiment are mainly shown. It may be assumed that the user terminal 20 also includes other functional blocks necessary for radio communication.

The baseband signal processing section 204 included in the user terminal 20 includes at least a control section 401, a transmission signal generation section 402, a mapping section 403, a reception signal processing section 404, and a measurement section 405. Note that these components only need to be included in the user terminal 20, and part or all of the components may not be included in the baseband signal processing section 204.

The control section 401 controls the entirety of the user terminal 20. The control section 401 can be constituted by a controller, a control circuit, or a control device that is explained based on common understanding in the technical field of the present disclosure.

The control section 401 controls, for example, generation of signals in the transmission signal generation section 402, allocation of signals in the mapping section 403, etc. Furthermore, the control section 401 controls signal reception processing in the reception signal processing section 404, signal measurements in the measurement section 405, etc.

The control section 401 acquires a downlink control signal and a downlink data signal transmitted from the base station 10 from the reception signal processing section 404. The control section 401 controls generation of an uplink control signal and/or an uplink data signal, based on the result of determining whether or not retransmission control on a downlink control signal and/or a downlink data signal is necessary, or the like.

The control section 401 may perform control to form a transmission beam and/or a reception beam, using digital BF (e.g., precoding) by the baseband signal processing section 204 and/or analog BF (e.g., phase rotation) by the transmitting/receiving sections 203.

Further, the control section 401 that has acquired various types of information reported from the base station 10 from the reception signal processing section 404 may update parameters used for control based on the information.

The transmission signal generation section 402 generates uplink signals (such as an uplink control signal, an uplink data signal, and an uplink reference signal) based on instructions from the control section 401, and outputs them to the mapping section 403. The transmission signal generation section 402 can be constituted by a signal generator, a signal generation circuit, or a signal generation device that is explained based on common understanding in the technical field of the present disclosure.

For example, the transmission signal generation section 402 generates uplink control signals about delivery acknowledgement information, channel state information (CSI), etc., based on instructions from the control section 401. The transmission signal generation section 402 also generates an uplink data signal based on an instruction from the control section 401. For example, if a UL grant is included in a downlink control signal reported from the base station 10, the transmission signal generation section 402 is instructed to generate an uplink data signal from the control section 401.

The mapping section 403 maps an uplink signal generated in the transmission signal generation section 402 to radio resources, based on an instruction from the control section 401, and outputs it to the transmitting/receiving sections 203. The mapping section 403 can be constituted by a mapper, a mapping circuit, or a mapping device that is explained based on common understanding in the technical field of the present disclosure.

The reception signal processing section 404 performs reception processing (such as demapping, demodulation, and decoding) on received signals input from the transmitting/receiving sections 203. Here, the received signals are, for example, downlink signals (a downlink control signal, a downlink data signal, a downlink reference signal, etc.) transmitted from the base station 10. The reception signal processing section 404 can be constituted by a signal processor, a signal processing circuit, or a signal processing device that is explained based on common understanding in the technical field of the present disclosure. The reception signal processing section 404 can constitute a receiving section according to the present disclosure.

The reception signal processing section 404 outputs information decoded by the reception processing to the control section 401. The reception signal processing section 404 outputs, for example, broadcast information, system information, RRC signaling, DCI, etc. to the control section 401. The reception signal processing section 404 outputs received signals and/or signals that have been subjected to the reception processing to the measurement section 405.

The measurement section 405 performs measurements on the received signals. The measurement section 405 can be constituted by a measuring instrument, a measuring circuit, or a measuring device that is explained based on common understanding in the technical field of the present disclosure.

For example, the measurement section 405 may perform RRM measurements, CSI measurements, etc. based on the received signals. The measurement section 405 may measure received power (e.g., RSRP), received quality (e.g., RSRQ, SINR, or SNR), signal strength (e.g., RSSI), propagation path information (e.g., CSI), etc. The measurement results may be output to the control section 401.

The transmitting/receiving sections 203 may receive an instruction to transmit a reference signal for forming spherical coverage. The transmission instruction may be higher layer signaling, physical layer signaling, or a combination of these. The reference signal may be an SRS, or may be replaced with another reference signal, a desired signal or channel, or a combination of these.

The transmitting/receiving sections 203 may form the spherical coverage and transmit the reference signal, based on the transmission instruction. The control section 401 may control the transmission of the reference signal to form the spherical coverage based on the transmission instruction.

The transmitting/receiving sections 203 may transmit information on the number of required resources to form the spherical coverage (e.g., the number of cover resources) or the indexes of the required resources (e.g., SRIs).

The transmitting/receiving sections 203 may transmit information indicating whether or not user terminal capability information on the maximum configurable number of resources of the reference signal corresponds to information on the number of required resources to form the spherical coverage.

The transmitting/receiving sections 203 may assume that they are not required to transmit (or ignore transmission of) the reference signal using resources exceeding the number of required resources to form the spherical coverage.

The transmitting/receiving sections 203 may receive configuration information on a resource set of the reference signal, and the configuration information here may include information indicating that this resource set corresponds to spherical coverage.

### (Hardware configuration)

The block diagrams used in the description of the above embodiments show blocks in functional units. These functional blocks (components) are implemented by a desired combination of at least one of hardware and software. How to implement each functional block is not particularly limited. That is, each functional block may be implemented using a single physically or logically combined device, or may be implemented by directly or indirectly connecting two or more physically or logically separate devices (using, for example, wire, radio, or the like) and using the two or more devices. The functional blocks may be implemented by combining software with the single device or the two or more devices.

Here, the functions include, but are not limited to, judgement, decision, determination, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, etc. For example, a functional block (component) that functions to transmit may be referred to as a transmitting section, a transmitter, or the like. As described above, none is limited to a particular way of implementation.

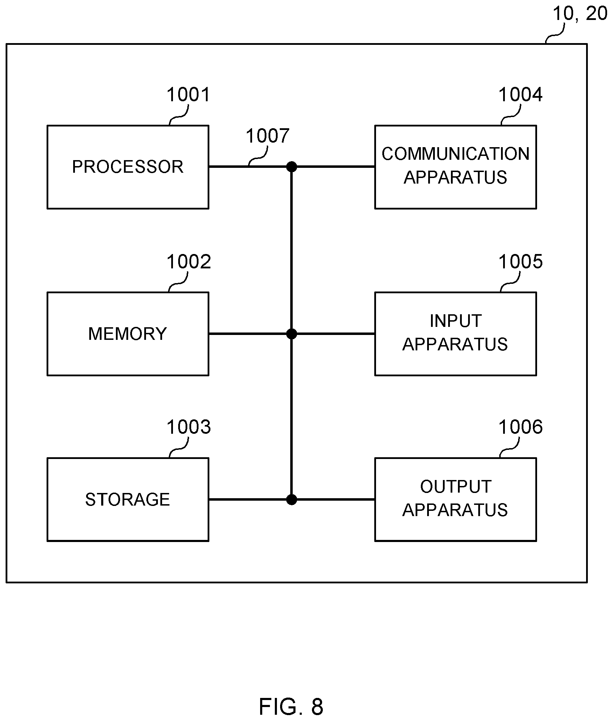

For example, the base station, the user terminal, etc. according to one embodiment of the present disclosure may function as computers that execute the processing in the radio communication method of the present disclosure. Fig. 8 is a diagram showing an example of a hardware configuration of the base station and the user terminal according to one embodiment. The above-described base station 10 and user terminal 20 may each be physically formed as a computer apparatus that includes a processor 1001, a memory 1002, a storage 1003, a communication apparatus 1004, an input apparatus 1005, an output apparatus 1006, a bus 1007, etc.

In the present disclosure, words such as an apparatus, a circuit, a device, a part, and a section can be replaced with each other. The hardware configuration of the base station 10 and the user terminal 20 may be designed to include one or more of the apparatuses shown in the figure, or may be designed not to include some apparatuses.

For example, although the single processor 1001 is shown in the figure, a plurality of processors may be included. Furthermore, processing may be executed by a single processor, or processing may be executed by two or more processors simultaneously, sequentially, or using other methods. The processor 1001 may be implemented by one or more chips.

Each function of the base station 10 and the user terminal 20 is implemented by predetermined software (program) being read on hardware such as the processor 1001 and the memory 1002, by which the processor 1001 performs operations, controlling communication via the communication apparatus 1004, and controlling at least one of reading and writing of data at the memory 1002 and the storage 1003.

For example, the processor 1001 runs an operating system to control the entire computer. The processor 1001 may be constituted by a central processing unit (CPU) that includes an interface with peripheral equipment, a control unit, an arithmetic unit, a register, etc. For example, the above-described baseband signal processing section 104 (204), call processing section 105, and others may be implemented by the processor 1001.

The processor 1001 reads programs (program codes), software modules, data, etc. from at least one of the storage 1003 and the communication apparatus 1004 into the memory 1002, and executes various types of processing according to these. As the programs, programs to cause the computer to execute at least part of the operations described in the above embodiments are used. For example, the control section 401 of the user terminal 20 may be implemented by a control program that is stored in the memory 1002 and operates on the processor 1001. The other functional blocks may be implemented likewise.

The memory 1002 is a computer-readable recording medium, and may be constituted by, for example, at least one of a read-only memory (ROM), an erasable programmable ROM (EPROM), an electrically EPROM (EEPROM), a random-access memory (RAM), and another suitable storage medium. The memory 1002 may be referred to as a register, a cache, a main memory (main storage), or the like. The memory 1002 can store programs (program codes), software modules, etc. that are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (e.g., a compact disc (such as a compact disc ROM (CD-ROM)), a digital versatile disc, or a Blu-ray (registered trademark) disk), a removable disk, a hard disk drive, a smart card, a flash memory device (e.g., a card, a stick, or a key drive), a magnetic stripe, a database, a server, and another suitable storage medium. The storage 1003 may be referred to as a "secondary storage apparatus".

The communication apparatus 1004 is hardware (a transmitting and receiving device) for performing inter-computer communication via at least one of a wired network and a wireless network, and is also referred to, for example, as a network device, a network controller, a network card, a communication module, or the like. The communication apparatus 1004 may include a high frequency switch, a duplexer, a filter, a frequency synthesizer, etc. to implement, for example, at least one of Frequency Division Duplex (FDD) and Time Division Duplex (TDD). For example, the above-described transmitting and receiving antennas 101 (201), amplification sections 102 (202), transmitting/receiving sections 103 (203), transmission line interface 106, and others may be implemented by the communication apparatus 1004. Each transmitting/receiving section 103 (203) may be implemented by a transmitting section 103a (203a) and a receiving section 103b (203b) that are physically or logically separated.

The input apparatus 1005 includes input devices for receiving input from the outside (such as a keyboard, a mouse, a microphone, a switch, a button, and a sensor). The output apparatus 1006 includes output devices for performing output to the outside (such as a display, a speaker, and a light-emitting diode (LED) lamp). The input apparatus 1005 and the output apparatus 1006 may be integrated (e.g., a touch panel).

The apparatuses such as the processor 1001 and the memory 1002 are connected by a bus 1007 for communicating information. The bus 1007 may be formed using a single bus, or may be formed using different buses for different connections between the apparatuses.

The base station 10 and the user terminal 20 may include hardware such as a microprocessor, a digital signal processor (DSP), an application-specific integrated circuit (ASIC), a programmable logic device (PLD), a field-programmable gate array (FPGA), etc. Part or all of the functional blocks may be implemented using the hardware. For example, the processor 1001 may be implemented using at least one of these pieces of hardware.

### (Modifications)

Note that the terms described in the present disclosure and the terms necessary to understand the present disclosure may be replaced with terms having the same or similar meanings. For example, at least one of a channel and a symbol may be a signal (signaling). A signal may be a message. A reference signal may be abbreviated as an RS, and may be referred to as a pilot, a pilot signal, or the like, depending on a standard applied. Furthermore, a component carrier (CC) may be referred to as a cell, a frequency carrier, a carrier frequency, or the like.

A radio frame may be comprised of one or more periods (frames) in the time domain. The one or more periods (frames) constituting the radio frame may be referred to as a subframe(s). Furthermore, a subframe may be comprised of one or more slots in the time domain. A subframe may have a fixed duration (e.g., 1 ms) independent of a numerology.

Here, a numerology may be a communication parameter applied to at least one of transmission and reception of a certain signal or channel. For example, a numerology may indicate at least one of a subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, etc.

A slot may be comprised of one or more symbols in the time domain (such as orthogonal frequency-division multiplexing (OFDM) symbols or single-carrier frequency-division multiple access (SC-FDMA) symbols). Further, a slot may be a time unit based on a numerology.

A slot may include a plurality of mini slots. Each mini slot may be comprised of one or more symbols in the time domain. A mini slot may be referred to as a subslot. A mini slot may be comprised of fewer symbols than a slot. A PDSCH (or a PUSCH) transmitted in a time unit larger than a mini slot may be referred to as PDSCH (PUSCH) mapping type A. A PDSCH (or a PUSCH) transmitted using a mini slot may be referred to as PDSCH (PUSCH) mapping type B.

A radio frame, a subframe, a slot, a mini slot, and a symbol each represent a time unit in signal transmission. For a radio frame, a subframe, a slot, a mini slot, and a symbol, other corresponding names may be used. Note that time units such as a frame, a subframe, a slot, a mini slot, and a symbol in the present disclosure may be replaced with each other.

For example, one subframe may be referred to as a transmission time interval (TTI). A plurality of consecutive subframes may be referred to as a TTI. One slot or one mini slot may be referred to as a TTI. That is, at least one of a subframe and a TTI may be a subframe (1 ms) in existing LTE, or may be a period shorter than 1 ms (e.g., one to thirteen symbols), or may be a period longer than 1 ms. Note that a unit representing a TTI may be referred to as a slot, a mini slot, or the like instead of a subframe.

Here, a TTI refers to, for example, a minimum time unit of scheduling in radio communication. For example, in LTE systems, a base station performs scheduling to allocate radio resources (such as a frequency bandwidth and transmission power that can be used at each user terminal) in TTI units to each user terminal. Note that the definition of a TTI is not limited to this.

A TTI may be a transmission time unit of a channel-coded data packet (transport block), a code block, a codeword, etc. or may be a processing unit of scheduling, link adaptation, etc. When a TTI is given, a time interval (e.g., the number of symbols) to which a transport block, a code block, a codeword, or the like is actually mapped may be shorter than the TTI.

When one slot or one mini slot is referred to as a TTI, one or more TTIs (that is, one or more slots or one or more mini slots) may be a minimum time unit of scheduling. The number of slots (the number of mini slots) constituting the minimum time unit of scheduling may be controlled.

A TTI having a duration of 1 ms may be referred to as a usual TTI (a TTI in LTE Rel. 8 to 12), a normal TTI, a long TTI, a usual subframe, a normal subframe, a long subframe, a slot, or the like. A TTI shorter than a usual TTI may be referred to as a shortened TTI, a short TTI, a partial or fractional TTI, a shortened subframe, a short subframe, a mini slot, a subslot, a slot, or the like.

A long TTI (such as a normal TTI or a subframe) may be replaced with a TTI having a duration exceeding 1 ms. A short TTI (such as a shortened TTI) may be replaced with a TTI having a TTI length less than the TTI length of a long TTI and more than or equal to 1 ms.

A resource block (RB) is a resource allocation unit in the time domain and the frequency domain, and may include one or more consecutive subcarriers in the frequency domain. The number of subcarriers included in an RB may be the same regardless of numerologies, and may be twelve, for example. The number of subcarriers included in an RB may be determined based on a numerology.

An RB may include one or more symbols in the time domain, and may have a length of one slot, one mini slot, one subframe, or one TTI. One TTI, one subframe, etc. may each be comprised of one or more resource blocks.

One or more RBs may be referred to as a physical resource block (PRB), a subcarrier group (SCG), a resource element group (REG), a PRB pair, an RB pair, or the like.

A resource block may be comprised of one or more resource elements (REs). For example, one RE may be a radio resource region of one subcarrier and one symbol.

A bandwidth part (BWP) (which may be referred to as a partial bandwidth or the like) may represent a subset of consecutive common resource blocks (RBs) for a certain numerology in a certain carrier. Here, common RBs may be specified by the indexes of RBs based on a common reference point of the carrier. PRBs may be defined in a BWP and numbered within the BWP.

BWPs may include a BWP for UL (UL BWP) and a BWP for DL (DL BWP). For a UE, one or more BWPs may be configured within one carrier.

At least one of the configured BWPs may be active, and the UE does not have to expect transmission/reception of a predetermined signal/channel outside the active BWP. Note that "cell", "carrier", etc. in the present disclosure may be replaced with "BWP".

Note that the structures of a radio frame, a subframe, a slot, a mini slot, a symbol, etc. described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, and the number of symbols, the symbol length, the cyclic prefix (CP) length in a TTI can be variously changed.

The information, parameters, etc. described in the present disclosure may be represented using absolute values, or may be represented using relative values with respect to predetermined values, or may be represented using other corresponding information. For example, a radio resource may be specified by a predetermined index.

The names used for parameters etc. in the present disclosure are in no respect limiting. In addition, equations etc. using these parameters may differ from those explicitly disclosed in the present disclosure. Since various channels (such as a Physical Uplink Control Channel (PUCCH) and a Physical Downlink Control Channel (PDCCH)) and information elements can be identified by various suitable names, the various names assigned to these various channels and information elements are in no respect limiting.

The information, signals, etc. described in the present disclosure may be represented using any of a variety of different technologies. For example, data, an instruction, a command, information, a signal, a bit, a symbol, a chip, etc., which may be referred to throughout the above description, may be represented by a voltage, a current, an electromagnetic wave, a magnetic field or a magnetic particle, an optical field or an optical photon, or any combination of these.

Information, signals, etc. can be output in at least one of a direction from a higher layer to a lower layer and a direction from a lower layer to a higher layer. Information, signals, etc. may be input and output via a plurality of network nodes.

Input and output information, signals, etc. may be stored in a specific location (e.g., memory), or may be managed using a control table. Information, signals, etc. to be input and output can be overwritten, updated, or appended. Information, signals, etc. that have been output may be deleted. Information, signals, etc. that have been input may be transmitted to another apparatus.

Notification of information is not limited to that in the aspects/embodiments described in the present disclosure, and may be performed using other methods. For example, notification of information may be implemented by physical layer signaling (e.g., Downlink Control Information (DCI) or Uplink Control Information (UCI)), higher layer signaling (e.g., Radio Resource Control (RRC) signaling, broadcast information (such as a Master Information Block (MIB) or a System Information Block (SIB)), or Medium Access Control (MAC) signaling), another signal, or a combination of these.

Note that physical layer signaling may be referred to as Layer 1/Layer 2 (L1/L2) control information (a L1/L2 control signal), L1 control information (a L1 control signal), or the like. RRC signaling may be referred to as an RRC message, and may be, for example, an RRC connection setup message, an RRC connection reconfiguration message, or the like. MAC signaling may be reported using, for example, a MAC control element (MAC CE).

Notification of a predetermined piece of information (e.g., notification that "X holds") does not necessarily have to be made explicitly, and may be made implicitly (for example, by not making a notification of the predetermined piece of information, or by making a notification of another piece of information).

Determination may be performed using a value represented by one bit (0 or 1), or may be performed using a Boolean represented by true or false, or may be performed by comparing numerical values (e.g., comparison with a predetermined value).

Software, regardless of whether it is referred to as software, firmware, middleware, microcode, or a hardware description language, or referred to by another name, should be interpreted broadly to mean a command, a command set, a code, a code segment, a program code, a program, a subprogram, a software module, an application, a software application, a software package, a routine, a subroutine, an object, an executable file, an execution thread, a procedure, a function, etc.

Software, commands, information, etc. may be transmitted and received via a transmission medium. For example, when software is transmitted from a website, a server, or another remote source using at least one of a wired technology (a coaxial cable, an optical fiber cable, a twisted-pair cable, a digital subscriber line (DSL), or the like) and a wireless technology (infrared radiation, microwaves, or the like), at least one of the wired technology and the wireless technology is included in the definition of the transmission medium.

The terms "system" and "network" as used in the present disclosure may be used interchangeably.

In the present disclosure, terms such as "precoding", "precoder", "weight (precoding weight)", "Quasi-Co-Location (QCL)", "Transmission Configuration Indication (TCI) state", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" may be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. A base station may be referred to by a term such as a macro cell, a small cell, a femto cell, or a pico cell.

A base station can accommodate one or more (e.g., three) cells. When a base station accommodates multiple cells, the entire coverage area of the base station can be divided into multiple smaller areas. Each smaller area can provide communication service through a base station subsystem (e.g., an indoor small base station (a remote radio head (RRH)). The term "cell" or "sector" refers to part or all of the coverage area of at least one of a base station and a base station subsystem that provides communication service in this coverage.

In the present disclosure, terms such as "mobile station (MS)", "user terminal", "user equipment (UE)", and "terminal" may be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of a base station and a mobile station may be referred to as a transmitting apparatus, a receiving apparatus, a communication apparatus, or the like. At least one of a base station and a mobile station may be a device mounted on a mobile object, a mobile object itself, or the like. The mobile object may be transportation (such as a vehicle or an airplane), an unmanned mobile object (such as a drone or an autonomous driving car), or a (manned or unmanned) robot. At least one of a base station and a mobile station may be an apparatus that does not necessarily move during communication operation. For example, at least one of a base station and a mobile station may be an Internet of Things (IoT) device such as a sensor.

A base station in the present disclosure may be replaced with a user terminal. For example, each aspect/embodiment of the present disclosure may be applied to a configuration in which communication between a base station and a user terminal is replaced with communication between multiple user terminals (which may be referred to as, for example, Device-to-Device (D2D), Vehicle-to-Everything (V2X), or the like). In this case, the user terminal 20 may have the functions of the base station 10 described above. In addition, words such as "uplink" and "downlink" may be replaced with a word for terminal-to-terminal communication (e.g., "side"). For example, an uplink channel, a downlink channel, etc. may be replaced with a side channel.

Likewise, a user terminal in the present disclosure may be replaced with a base station. In this case, the base station 10 may have the functions of the user terminal 20 described above.

An operation performed by a base station in the present disclosure may be performed by its upper node in some cases. It is obvious that in a network including one or more network nodes having base stations, various operations performed for communication with terminals can be performed by the base stations, the one or more network nodes other than base stations (which may be a Mobility Management Entity (MME), a Serving-Gateway (S-GW), etc., but are not limited to them), or a combination of these.

The aspects/embodiments described in the present disclosure may be used singly or in combination, or may be switched with implementation. The processing order, sequence, flowchart, etc. in the aspects/embodiments described in the present disclosure may be changed in order as long as inconsistencies do not arise. For example, the methods described in the present disclosure have presented various step elements using an exemplary order, and are not limited to the presented specific order.

The aspects/embodiments described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), New-Radio Access Technology (RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems using other adequate radio communication methods, next generation systems expanded based on these, etc. Further, the aspects/embodiments may be applied to a combination of two or more systems (e.g., a combination of LTE or LTE-A and 5G).

The phrase "based on" as used in the present disclosure does not mean "based only on", unless otherwise specified. In other words, the phrase "based on" means both "based only on" and "based at least on".

All references to the elements using designations such as "first" and "second" as used in the present disclosure do not generally limit the amount or sequence of these elements. These designations can be used in the present disclosure only as a convenient way to distinguish between two or more elements. Thus, references to first and second elements do not mean that only the two elements can be employed, or that the first element must precede the second element in some form.

The term "determining" as used in the present disclosure may include a wide variety of operations. For example, "determining" may be interpreted as "determining" judging, calculating, computing, processing, deriving, investigating, looking up, search, inquiry (e.g., search in a table, a database, or another data structure), ascertaining, etc.

Furthermore, "determining" may be interpreted as "determining" receiving (e.g., receiving information), transmitting (e.g., transmitting information), input, output, accessing (e.g., accessing data in memory), etc.

Moreover, "determining" may be interpreted as "determining" resolving, selecting, choosing, establishing, comparing, etc. That is, "determining" may be interpreted as "determining" some action.

In addition, "determining" may be replaced with "assuming", "expecting", "considering", or the like.

The terms "connected" and "coupled", or all variations of them as used in the present disclosure mean all direct or indirect connections or couplings between two or more elements, and may include the existence of one or more intermediate elements between two elements "connected" or "coupled" to each other. Coupling or connection between elements may be physical, logical, or a combination of these. For example, "connection" may be replaced with "access".

When two elements are connected in the present disclosure, the elements can be considered to be "connected" or "coupled" to each other, using one or more wires, a cable, a printed electrical connection, or the like, or using, as some non-limiting and non-inclusive examples, electromagnetic energy having a wavelength in the radio frequency range, the microwave range, or the optical (both visible and invisible) range, or the like.

In the present disclosure, the words "A and B are different" may mean that "A and B are different from each other". The words may alternatively mean that "A and B are different from C". Words such as "separate" and "coupled" may be interpreted like "different".

When "include", "including", and variations of these are used in the present disclosure, these words are intended to be inclusive like the word "comprising". Furthermore, the word "or" as used in the present disclosure is intended not to be exclusive OR.

In the present disclosure, when the translation adds articles such as a, an, and the in English, the present disclosure may include cases where nouns following these articles are in the plural.

Although the invention according to the present disclosure has been described in detail above, it is obvious to a person skilled in the art that the invention according to the present disclosure is not limited to the embodiments described in the present disclosure. The invention according to the present disclosure can be implemented in modified and altered modes without departing from the spirit and scope of the invention defined based on the description of the claims. Thus, the description of the present disclosure is for the purpose of explaining examples and does not bring any limiting meaning to the invention according to the present disclosure.

## Claims

1. A user terminal comprising:
a receiving section that receives an instruction to transmit a reference signal for forming spherical coverage; and
a transmitting section that transmits the reference signal, forming the spherical coverage, based on the transmission instruction.

2. The user terminal according to claim 1, wherein the transmitting section transmits information on the number of required resources or indexes of required resources to form the spherical coverage.

3. The user terminal according to claim 2, wherein the transmitting section transmits information indicating whether or not user terminal capability information on the maximum configurable number of resources of the reference signal corresponds to the information on the number of required resources to form the spherical coverage.

4. The user terminal according to claim 2 or 3, wherein the transmitting section assumes that transmission of the reference signal using resources exceeding the number of required resources to form the spherical coverage is not requested.

5. The user terminal according to any one of claims 1 to 4, wherein the receiving section receives configuration information on a resource set of the reference signal, and here, the configuration information includes information indicating that the resource set corresponds to the spherical coverage.

6. A radio communication method for a user terminal, comprising the steps of:
receiving an instruction to transmit a reference signal for forming spherical coverage; and
transmitting the reference signal, forming the spherical coverage, based on the transmission instruction.
